# EUROPÄISCHE PATENTSCHRIFT

(11) **EP 4 244 128 B1**
(45) Veröffentlichungstag und Bekanntmachung des Hinweises auf die Patenterteilung: **17.06.2026**
(21) Anmeldenummer: 21801092.4
(22) Anmeldetag: 26.10.2021
(51) Int. Cl.: B62M 6/50, B62M 6/55, B62J 45/411, B62J 45/413, B62J 45/421, B62M 25/00

(54) **VERFAHREN ZUR SCHALTUNG EINES ÜBERSETZUNGSVERHÄLTNISSES EINES SCHALTBAREN GETRIEBES, STEUERGERÄT UND FAHRZEUG**
METHOD FOR CHANGING A TRANSMISSION RATIO OF A SHIFTABLE TRANSMISSION, CONTROL DEVICE AND VEHICLE
PROCEDE DE CHANGEMENT DE RAPPORT DE TRANSMISSION D'UNE BOITE DE VITESSES CHANGEABLE, APPAREIL DE COMMANDE ET VEHICULE

(30) Priorität: 11.11.2020 DE 102020214163
(43) Veröffentlichungstag der Anmeldung: 20.09.2023
(73) Patentinhaber: Robert Bosch GmbH, 70442 Stuttgart (DE)
(72) Erfinder: REISIGE, Christian, 72072 Tuebingen (DE); MANEWALD, Merlin Martin, 72764 Reutlingen (DE); BAUMGAERTNER, Daniel, 72072 Tuebingen (DE)
(86) Internationale Anmeldenummer: PCT/EP2021/079622
(87) Internationale Veröffentlichungsnummer: WO 2022/100999

(56) Entgegenhaltungen:
- EP-B1- 2 724 925
- DE-A1- 102017 124 175
- DE-A1- 102017 128 147
- DE-A1- 102018 128 267
- US-A1- 2009 048 747

## Beschreibung

Die vorliegende Erfindung betrifft ein Verfahren zur Schaltung eines Übersetzungsverhältnisses eines schaltbaren Getriebes eines Fahrzeugs. Die Erfindung betrifft auch ein Steuergerät, welches dazu eingerichtet ist, das Verfahren durchzuführen, und ein Fahrzeug mit diesem Steuergerät.

### Stand der Technik

Eine Nabenschaltung eines Fahrrads als Fahrzeug schaltet oftmals nicht unter Last. Teilweise können solche Fahrrad-Nabenschaltungen nur bei einem Drehmoment von nahezu null an der Nabe geschaltet werden. Zweiräder als Fahrzeug, welche einen Antriebsmotor aufweisen, wie Elektrofahrräder beziehungsweise E-Bikes, bringen in der Regel im Betrieb fast permanent ein Drehmoment auf die jeweilige Nabe mit der Nabenschaltung beziehungsweise dem Innengetriebe auf. Bei Elektrofahrrädern wird im Betrieb ein sinusförmiges Fahrerdrehmoment beziehungsweise Fahrerdrehmoment typischerweise mit einem Motordrehmoment überlagert, wobei das Motordrehmoment beispielsweise in Abhängigkeit eines erfassten Fahrerdrehmoments erzeugt wird. Das erzeugte Motordrehmoment weist gegenüber einem Stillstand der Pedale einen zeitlichen Nachlauf auf beziehungsweise bricht nicht abrupt ab. Damit der Gangwechsel beim Elektrofahrrad dennoch erfolgen kann, wird typischerweise bei einem erfassten oder erkannten Gangwechselwunsch beziehungsweise Gangwechselsignal das Motordrehmoment für beispielsweise eine Zeitspanne von 0,5 Sekunden kurz reduziert oder komplett ausgeschaltet. Die Zeitdauer der Motordrehmomentreduktion lässt sich nicht beliebig verkürzen, weil sonst ein Gangwechsel nicht mehr zuverlässig durchgeführt werden kann.

Die Schrift DE 10 2010 017 412 A1 offenbart eine Schaltvorrichtung eines Fahrzeugs mit Elektromotor umfasst. Der Elektromotor unterstützt bei eingelegtem Gang einer Gangschaltung einen Antrieb durch Menschenkraft, wobei die Schaltvorrichtung eine Steuereinrichtung aufweist, wobei die Steuereinrichtung derart ausgebildet ist, dass sie das von dem Elektromotor zur Verfügung gestellte Antriebsdrehmoment bei einem Gangwechsel der Gangschaltung vermindert.

Das Dokument DE 10 2012 219 991 A1 offenbart ein Verfahren zum Betreiben eines Fahrrads mit elektrischem Hilfsantrieb und einer Gangschaltung, wobei ein Schaltvorgang bestimmt und der elektrische Hilfsantriebs derart angesteuert wird, dass ein abgegebenes Drehmoment angepasst wird, um Beschädigungen von Bauteilen der Gangschaltung zu vermeiden.

Die Schrift DE 10 2013 215 783 A1 offenbart einen Fahrradantrieb für ein Fahrrad mit einem Hilfskraftmotor und einer mehrstufigen Nabenschaltung, wobei unter einer Betätigung einer Schalteinrichtung eine Bestromung des Hilfskraftmotors verringert oder abgeschaltet wird.

Die Schrift DE 10 2012 107 939 A1 offenbart eine Fahrrad-Antriebsvorrichtung mit einem Antriebsunterstützungsmotor sowie einem Mikrocomputer. Ein Gangschaltsteuerungsabschnitt des Mikrocomputers erhält einen Gangschaltbefehl und weist einen Leistungssteuerungsabschnitt an, die Leistung des Motors zu stoppen oder zu verringern.

Das Dokument US 2009/048747 A1 offenbart ein gattungsgemäßes Verfahren zur Schaltung eines Übersetzungsverhältnisses eines schaltbaren Getriebes eines hybriden Fahrzeugs.

Die durch die oben zitierten Schriften vorgeschlagene Motordrehmomentreduktion wird vom Fahrer in der Regel allerdings negativ empfunden, da eine Unterstützung des Fahrers durch das Motordrehmoment wird für eine merkliche Zeit reduziert wird oder fehlt. Es resultiert außerdem manchmal ein unangenehmes Ruckeln. Insbesondere in steilem Gelände kann die Kraftunterbrechung des Weiteren zu einer inakzeptablen Geschwindigkeitsreduktion führen und Unfälle verursachen.

Die Aufgabe der vorliegenden Erfindung ist es, einen Gangschaltvorgang für ein Fahrzeug mit einem Antriebsmotor, insbesondere für ein Elektrofahrrad, zu verbessern, wobei das Fahrzeug beziehungsweise Elektrofahrrad bevorzugt ein schaltbares Getriebe in Form einer Nabenschaltung aufweist.

### Offenbarung der Erfindung

Die vorstehende Aufgabe wird erfindungsgemäß entsprechend der unabhängigen Ansprüche **1,** 13 und 14 gelöst.

Die vorliegende Erfindung betrifft ein Verfahren zur Schaltung eines Übersetzungsverhältnisses eines schaltbaren Getriebes beziehungsweise einer Gangschaltung eines Fahrzeugs. Das Fahrzeug, insbesondere ein Elektrofahrrad, umfasst des Weiteren einen Elektromotor zum Antrieb des Fahrzeugs. Das schaltbare Getriebe, vorteilhafterweise ein Innengetriebe, beziehungsweise die Gangschaltung, insbesondere angeordnet an einer Nabe eines Rads beziehungsweise eine Nabenschaltung, umfasst vorteilhafterweise ein schaltbares Planetengetriebe. Das Verfahren beginnt mit der Erzeugung eines Motordrehmoments mittels des Elektromotors. Das Motordrehmoment kann vorteilhafterweise in Abhängigkeit einer erfassten Eingabe beziehungsweise Betätigung des Fahrers zum gewünschten Vortrieb erzeugt werden, beispielsweise in Abhängigkeit einer erfassten Eingabe an einem Gaspedal des Fahrzeugs und/oder in Abhängigkeit einer erfassten Eingabe an einem Drehgriff eines Lenkers des Fahrzeugs und/oder in Abhängigkeit eines erfassten Fahrerdrehmoments und/oder einer erfassten Trittfrequenz des Fahrers an einer Tretachse des Fahrzeugs. Des Weiteren wird in einem weiteren Schritt eine Ermittlung eines bevorstehenden Gangwechsels durchgeführt, wobei insbesondere ein elektrisches Gangwechselsignal erzeugt wird. Anschließend wird der Betrag des erzeugten Motordrehmoments in Abhängigkeit des ermittelten bevorstehenden Gangwechsels durch Ansteuerung des Elektromotors reduziert, wobei der Betrag des erzeugten Motordrehmoments vorteilhafterweise, insbesondere zumindest kurzzeitig, auf Null reduziert wird. Durch die Reduktion des Betrags des erzeugten Motordrehmoments wird insbesondere auch die Drehzahl des Rotors reduziert und insbesondere auf Null gesenkt. Die Reduktion des Betrags des erzeugten Motordrehmoments erfolgt durch eine Beendigung der Ansteuerung des Elektromotors beziehungsweise durch eine Abschaltung der aktiven Bestromung des Elektromotors oder durch eine Anpassung der Ansteuerung beziehungsweise Bestromung des Elektromotors zur Erzeugung eines reduzierten Motordrehmoments. Nach der Reduktion des Betrags des erzeugten Motordrehmoments wird das Übersetzungsverhältnis des schaltbaren Getriebes während einer vorgegebenen Zeitspanne geändert beziehungsweise geschaltet. Mit anderen Worten wird während der vorgegebenen Zeitspanne ein anderer Gang der Gangschaltung eingelegt. Erfindungsgemäß wird während der vorgegebenen Zeitspanne zur Änderung des Übersetzungsverhältnisses wenigstens ein Motordrehmomentimpuls mittels des Elektromotors erzeugt. Vorteilhafterweise weist der Motordrehmomentimpuls die gleiche Drehrichtung wie das vorher erzeugte Motordrehmoment zum Antrieb des Fahrzeugs auf. Durch die Erfindung resultiert dann der Vorteil, dass ein mittleres Drehmoment während der vorgegebenen Zeitspanne zur Änderung beziehungsweise Schaltung des Übersetzungsverhältnisses größer als der reduzierte Betrag des Motordrehmoments ist, insbesondere ist durch den Motordrehmomentimpuls das mittlere Drehmoment während der vorgegebenen Zeitspanne größer null. Somit wird dem Fahrer auch während der vorgegebenen Zeitspanne zur Änderung des Übersetzungsverhältnisses somit eine Kraftunterstützung bereitgestellt, wodurch ein reduziertes Ruckeln des Fahrzeugs beim Schaltvorgang resultiert. Des Weiteren wird eine für Elektrofahrräder inakzeptable Geschwindigkeitsreduktion an Steilhängen vermieden. Vorteilhafterweise weist der wenigstens eine Motordrehmomentimpuls die gleiche Drehrichtung wie das vorher erzeugte Motordrehmoment zum Antrieb des Fahrzeugs und/oder es weist wenigstens ein Motordrehmomentimpuls eine gegengesetzte Drehrichtung wie das vorher erzeugte Motordrehmoment zum Antrieb des Fahrzeugs auf. Dadurch resultiert der weitere Vorteil, dass ein Gangwechsel zuverlässig vollzogen wird, da kurzzeitige lastfreie Phasen während der vorgegebenen Zeitspanne und durch den erzeugten Motordrehmomentimpuls eine rhythmische Belastung und Entlastung der Kette resultieren, wodurch das Getriebe kurzzeitig zur Hin- und Her-Bewegung beziehungsweise zur Schwingung angeregt wird. Diese Schwingung unterstützt den Gangwechsel des schaltbaren Getriebes, insbesondere der Nabenschaltung, insbesondere gegenüber einem auf Null reduzierten Motordrehmoment. Es resultiert auch der Vorteil, dass die vorgegebene Zeitspanne gegenüber dem Stand der Technik verkürzt werden kann. Erfindungsgemäß resultiert auch der Vorteil, dass die vorgegebene Zeitspanne gegenüber dem Stand der Technik verlängert werden kann, da dem Fahrer ein durch die Motordrehmomentimpulse resultierendes mittleres Drehmoment bereitgestellt wird. Die verlängerte vorgegebene Zeitspanne erlaubt vorteilhafterweise des Weiteren ein zuverlässiges lastfreies Schalten beziehungsweise eine lastfreie Änderung des Übersetzungsverhältnisses auch über mehrere Übersetzungsverhältnisse hinweg.

In einer besonders bevorzugten Ausgestaltung der Erfindung weist das Fahrzeug, insbesondere ein Elektrofahrrad, zusätzlich eine Tretachse beziehungsweise Kurbelwelle auf. Die Tretachse beziehungsweise Kurbelwelle ist mit Kurbeln und vorteilhafterweise Pedalen verbunden. Das Fahrzeug ist somit insbesondere dazu eingerichtet, Trittkräfte eines Fahrers auf die Pedale in eine Rotation der Tretachse umzuwandeln und ein Fahrerdrehmoment beziehungsweise Tretdrehmoment an der Tretachse sowie eine Rotation der Tretachse zum Antrieb des Fahrzeugs zu erzeugen. In dieser Ausgestaltung umfasst das Verfahren zusätzlich eine Erfassung einer Rotationslage beziehungsweise Drehwinkellage der Tretachse und/oder eine Erfassung wenigstens einer Position einer Kurbel an der Tretachse und/oder eines Fahrerdrehmoments und/oder einer Drehzahl der Tretachse. Anschließend wird ein Zeitpunkt zur Reduktion des erzeugten Motordrehmoments in Abhängigkeit der erfassten Drehwinkellage der Tretachse und/oder der erfassten Position der Kurbel und/oder des erfassten Fahrerdrehmoments und/oder der erfassten Drehzahl der Tretachse ermittelt. Die Trittkräfte beim Pedalieren beziehungsweise bei der Drehbewegung der Pedale schwanken typischerweise periodisch über dem Zeitverlauf und verschwinden im Bereich des oberen oder unteren Totpunktes. Der ermittelte Zeitpunkt zur Reduktion des erzeugten Motordrehmoments repräsentiert insbesondere eine Kurbelposition mit einem vorgegebenen Winkelversatz zu diesem oberen und/oder unteren Punkt beziehungsweise Totpunkt einer Kurbelrotation um die Tretachse. Mit anderen Worten repräsentiert der ermittelte Zeitpunkt eine Drehwinkellage der Tretachse beziehungsweise eine Position der Kurbel, bei welcher der Fahrer typischerweise keine oder nur eine reduzierte Trittkraft auf die Pedale aufbringt, da die Pedale im Wesentlichen senkrecht stehen. Die Drehwinkellagen mit verschwindendem erfassten Fahrerdrehmoment, welche durch den ermittelten Zeitpunkt repräsentiert werden, befinden sich typischerweise im Bereich des bezüglich der Hochachse des Fahrzeugs unteren und/oder oberen Punktes einer Rotation der Kurbeln um die Tretachse, da die Pedale im Wesentlichen senkrecht stehen. Die Reduktion des erzeugten Motordrehmoments erfolgt anschließend zusätzlich in Abhängigkeit des ermittelten Zeitpunktes. Alternativ oder zusätzlich erfolgt die Änderung des Übersetzungsverhältnisses des schaltbaren Getriebes in dieser Ausgestaltung zusätzlich in Abhängigkeit des ermittelten Zeitpunktes. Durch diese Ausgestaltung wird vorteilhafterweise der Zeitpunkt zur Reduktion des erzeugten Motordrehmoments und zur Änderung des Übersetzungsverhältnisses in Abhängigkeit der Trittfrequenz beziehungsweise Kadenz des Fahrers ermittelt. In dieser Ausgestaltung wird eine Schaltung unter Last zuverlässig vermieden, das heißt trotz der aufgebrachten Trittkräfte des Fahrers ein zumindest nahezu lastfreies Schalten ermöglicht. In dieser besonders bevorzugten Ausgestaltung wird mit anderen Worten ein lastfreier Zustand in der Zukunft prognostiziert, wobei bevorzugt die tatsächliche sensorische Erfassung einer Drehwinkellage der Tretachse und/oder der Position der Kurbel am unteren und/oder oberen Totpunkt vermieden wird. Der ermittelte Zeitpunkt des lastfreien Zustands in der Zukunft kann insbesondere in Abhängigkeit des erfassten Fahrerdrehmoments zuverlässig prognostiziert werden, da das Tretverhalten des Fahrers normalerweise innerhalb einer Kurbelumdrehung nicht abrupt abbricht beziehungsweise die Trittkraft kurz vor dem Schalten typischerweise nicht schlagartig zunimmt, insbesondere, wen der Zeitpunkt zusätzlich in Abhängigkeit der erfassten Trittfrequenz beziehungsweise Drehzahl der Tretachse beziehungsweise Kadenz ermittelt wird. Dadurch resultiert der Vorteil, dass eine sanftere und zeitlich abgestimmte beziehungsweise exakte Ansteuerung des Elektromotors zur Reduktion des erzeugten Motordrehmoments durchgeführt werden kan, so dass der Fahrer das Schalten beziehungsweise die Änderung des Übersetzungsverhältnisses an den Pedalen kaum wahrnimmt. Des Weiteren kann vorteilhafterweise die Drehwinkellage der Tretachse und/oder die Position der Kurbel ungenauer erfasst werden, wodurch Kosten eingespart werden.

In einer bevorzugten Ausführung der Erfindung werden während der vorgegebenen Zeitspanne zwei, drei oder vier Motordrehmomentimpulse erzeugt. In dieser Ausführung kann das durch die erzeugten Motordrehmomentimpulse resultierende mittlere Drehmoment während der vorgegebenen Zeitspanne erhöht und somit der Fahrer bei zuverlässiger Änderung des Übersetzungsverhältnisses verbessert kraftunterstützt werden.

Vorteilhafterweise resultiert durch die erzeugten Motordrehmomentimpulse während der vorgegebenen Zeitspanne ein mittleres Drehmoment, welches eine betragsmäßige Abweichung kleiner oder gleich 50 Prozent zu einem Betrag des unmittelbar vor der Reduktion erzeugten Motordrehmoments aufweist. Besonders bevorzugt ist die Abweichung des durch die erzeugten Motordrehmomentimpulse während der vorgegebenen Zeitspanne resultierenden mittleren Drehmoments kleiner oder gleich 30 Prozent zu dem Betrag des unmittelbar vor der Reduktion erzeugten Motordrehmoments. In dieser weiteren Ausführung wird der Fahrer vorteilhafterweise bei zuverlässiger Änderung des Übersetzungsverhältnisses verstärkt kraftunterstützt.

In einer Weiterführung ist während der vorgegebenen Zeitspanne die Summe der wenigstens zwei Reduktionszeitspannen beziehungsweise Reduktionszeitdauern, in welchen das Motordrehmoment reduziert ist, kleiner oder gleich der Summe der wenigstens einen Impulsdauer des erzeugten Motordrehmomentimpulses. Mit anderen Worten ist während der vorgegebenen Zeitspanne die zeitliche Summation der wenigstens einen Impulsdauer des Motordrehmomentimpulses größer oder gleich der zeitlichen Summation der Reduktionszeitspannen, in welcher das Motordrehmoment, insbesondere auf null, reduziert ist. Durch diese Weiterführung wird das durch die erzeugten Motordrehmomentimpulse resultierende mittlere Drehmoment während der vorgegebenen Zeitspanne zusätzlich erhöht. Der Fahrer wird bei zuverlässiger Änderung des Übersetzungsverhältnisses verbessert kraftunterstützt.

In einer anderen Ausgestaltung bleibt der Betrag der während der vorgegebenen Zeitspanne erzeugten Motordrehmomentimpulse gleich. Durch diese Ausgestaltung resultiert vorteilhafterweise ein erwartetes Verhalten des Fahrzeugs für den Fahrer.

In einer weiteren Ausgestaltung variiert der Betrag der während der vorgegebenen Zeitspanne erzeugten Motordrehmomentimpulse. Durch diese Ausgestaltung resultiert vorteilhafterweise ein erhöhtes mittleres Drehmoment während der vorgegebenen Zeitspanne sowie eine zuverlässigere Änderung des Übersetzungsverhältnisses.

In einer anderen Weiterführung wird die Dauer der vorgegebenen Zeitspanne und/oder die Anzahl der erzeugten Motordrehmomentimpulse in Abhängigkeit einer erfassten Geschwindigkeit des Fahrzeugs und/oder in Abhängigkeit einer erfassten Trittfrequenz des Fahrers und/oder in Abhängigkeit eines erfassten aktuell eingelegten Übersetzungsverhältnisses angepasst. Dadurch wird die Zuverlässigkeit der Änderung des Übersetzungsverhältnisses auch bei extremen Bedingungen erhöht. Des Weiteren kann in dieser Weiterführung das Verfahren an unterschiedliche Fahrsituationen optimal angepasst werden.

Es kann des Weiteren vorgesehen sein, dass die Ermittlung des bevorstehenden Gangwechsels mittels eines Gangwechsel-Tasters erfolgt, welcher dazu eingerichtet ist, eine Betätigung beziehungsweise Eingabe des Fahrers zu erfassen. Die erfasste Eingabe repräsentiert einen Wunsch zur Änderung des Übersetzungsverhältnisses. Mit anderen Worten wird basierend auf einer Betätigung eines Gangwechsel-Tasters, beispielsweise eines Schalthebels der Gangschaltung, der bevorstehende Gangwechsels ermittelt beziehungsweise das elektrische Gangwechselsignal erzeugt. Diese Art der Ermittlung des bevorstehenden Gangwechsels ist vorteilhafterweise schnell und effizient.

In einer alternativen Ausgestaltung wird der bevorstehenden Gangwechsel mittels eines Gangwechselerfassungssensors an einem Bowdenzug des schaltbaren Getriebes und/oder an dem schaltbaren Getriebe erfasst beziehungsweise ermittelt. Der Gangwechselerfassungssensor ist dazu eingerichtet, einen bevorstehenden Gangwechsel durch eine Bewegung des Bowdenzugs zu erfassen. Diese Art der Ermittlung des bevorstehenden Gangwechsels ist vorteilhafterweise leicht auf alle Arten von schaltbaren Getrieben und Gangschalthebeln beziehungsweise Gangwechsel-Taster übertragbar.

In einer weiteren Ausführung wird der bevorstehende Gangwechsel automatisch oder teilautomatisch basierend auf einem mittels eines Drehmomentsensors erfassten Fahrerdrehmoments des Fahrers an der Tretachse und/oder einer mittels eines Drehzahlsensors erfassten Trittfrequenz des Fahrers ermittelt beziehungsweise das Gangwechselsignal erzeugt. Vorteilhafterweise wird ein benötigter Gangwechsel beziehungsweise ein Gangwechselwunsch erfasst beziehungsweise ermittelt beziehungsweise ein Gangwechselsignal erzeugt, wenn mittels des Drehmomentsensors und/oder des Drehzahlsensors eine kurze Tretpause des Fahrers und/oder eine Über- oder Unterschreitung eines ersten Schwellenwertes für das Fahrerdrehmoment und/oder eine Über- oder Unterschreitung eines zweiten Schwellenwertes für die Drehzahl der Tretachse detektiert werden. Diese Art der Ermittlung des bevorstehenden Gangwechsels ist vorteilhafterweise leicht auf alle Arten von schaltbaren Getrieben und Schalthebeln übertragbar. Außerdem wird in dieser Ausführung kein zusätzlicher Sensor zur Ermittlung des bevorstehenden Gangwechsels benötigt, da beispielsweise Elektrofahrräder als Fahrzeug in der Regel einen Drehmomentsensor zur Erfassung des Fahrerdrehmoments an der Tretachse und/oder einen Drehzahlsensor aufweisen.

In einer weiteren optionalen Ausgestaltung der Erfindung wird dem Fahrer eine Information zu dem ermittelten Zeitpunkt zur Reduktion des erzeugten Motordrehmoments und/oder zu der vorgegebenen Zeitspanne zur Änderung des Übersetzungsverhältnisses angezeigt. Die angezeigte Information kann beispielsweise den bevorstehenden ermittelten Zeitpunkt zur Reduktion des erzeugten Motordrehmoments und/oder die Dauer der vorgegebenen Zeitspanne und/oder eine restliche Ablaufdauer der vorgegebenen Zeitspanne visualisieren, so dass der Fahrer das Verfahren gut versteht und auf die einzelnen Verfahrensschritte beziehungsweise Arten der Ansteuerungen vorbereitet ist.

Die Erfindung betrifft auch ein Steuergerät für das Fahrzeug. Das Steuergerät ist dazu eingerichtet, das erfindungsgemäße Verfahren zur Schaltung eines Übersetzungsverhältnisses des schaltbaren Getriebes durchzuführen.

Die Erfindung betrifft des Weiteren ein Fahrzeug, insbesondere ein Elektrofahrrad, wobei das Fahrzeug ein schaltbares Getriebe, einen Elektromotor zum Antrieb des Fahrzeugs und das erfindungsgemäße Steuergerät aufweist.

Weitere Vorteile ergeben sich aus der nachfolgenden Beschreibung von Ausführungsbeispielen mit Bezug zu den Figuren.
Figur 1: Elektrofahrrad als Fahrzeug
Figur 2: Ablaufdiagramm des Verfahrens als Blockschaltbild
Figur 3: Diagramm eines Drehmomentverlaufs im Betrieb eines Elektrofahrrads
Figur 4: Diagramm des Drehmomentverlaufs beim Schalten nach Stand der Technik
Figur 5: Beispiel eines erfindungsgemäßen Drehmomentverlaufs beim Schalten

### Ausführungsbeispiele

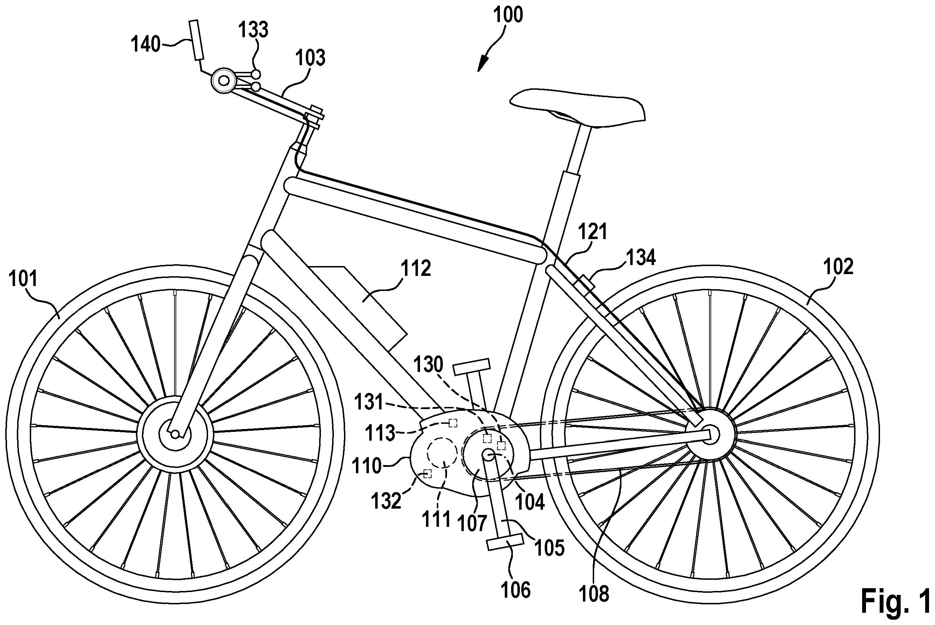

In Figur 1 ist ein Elektrofahrrad als Fahrzeug 100 schematisch dargestellt. Das Fahrzeug 100 weist ein Vorderrad 101 und ein Hinterrad 102 als Räder sowie einen Lenker 103 auf. Darüber hinaus umfasst das Fahrzeug 100 eine Tretachse 104, welche an beiden Seiten jeweils mittels einer Kurbel 105 mit einem Pedal 106 verbunden ist. Im Bereich der Tretachse 104 ist eine Antriebseinheit 110 mit einem Elektromotor 111 als Antriebsmotor angeordnet. Alternativ kann die Antriebseinheit 110 mit dem Elektromotor 111 auch an der Radnabe des Vorderrads 101 oder an der Radnabe des Hinterrads 102 angeordnet sein. Der Elektromotor 111 wird mittels einer Batterie 112 mit Strom beziehungsweise elektrischer Leistung versorgt. Zur Kraftübertragung weist das Fahrzeug 100 an der Antriebseinheit 110 ein Abtriebsritzel 107 beziehungsweise Kettenblatt auf. Das Abtriebsritzel 107 ist mittels eines Verbindungselements 108, beispielsweise einer Kette oder einem Riemen, mit der Radnabe des Hinterrads 102 verbunden. An der Radnabe des Hinterrads 102 ist eine Gangschaltung beziehungsweise ein schaltbares Getriebe 120 angeordnet, welches beispielsweise drei bis vierzehn unterschiedliche schaltbare Übersetzungsverhältnisse aufweist. Das schaltbare Getriebe 120 ist demnach in diesem Ausführungsbespiel als Nabenschaltung ausgeführt. Das schaltbare Getriebe 120 ist in einer einfachen Ausführungsform vorteilhafterweise dazu eingerichtet, durch eine Eingabe des Fahrers mittels eines Gangschalthebels beziehungsweise mittels eines Gangwechsel-Tasters 133 und mittels des Bowdenzugs 121 geschaltet zu werden. Eine Änderung des Übersetzungsverhältnisses des schaltbaren Getriebes 120 kann manuell, aber alternativ auch teilautomatisch oder automatisch erfolgen. Die optionale automatische Erzeugung eines Gangwechselsignals erfolgt in Abhängigkeit von Betriebsparametern, beispielsweise der Geschwindigkeit des Fahrzeugs, und/oder in Abhängigkeit von Fahrtparametern des Fahrers, beispielsweise dem erfassten Fahrerdrehmoment und/oder der Kadenz des Fahrers. Die optionale teilautomatische Erzeugung eines Gangwechselsignals erfolgt in Abhängigkeit von Betriebsparametern, beispielsweise der Geschwindigkeit des Fahrzeugs, und/oder in Abhängigkeit von Fahrtparametern des Fahrers, beispielsweise dem erfassten Fahrerdrehmoment und/oder der Kadenz des Fahrers, sowie basierend auf einer erfassten Eingabe des Fahrers des Fahrzeugs 100, welche einem Wunsch zur Änderung des Übersetzungsverhältnisses beziehungsweise Gangs repräsentiert. Das durch den Fahrer auf die Tretachse 104 aufgebrachte Fahrerdrehmoment und/oder das mittels des Elektromotors 111 erzeugte Motordrehmoment wird zunächst an das Abtriebsritzel 107 und mittels des Verbindungselements 108 an das schaltbare Getriebe 120 an der Radnabe des Hinterrads 102 übertragen. Des Weiteren umfasst das Fahrzeug 100 optionale Sensoren: Einen Drehmomentsensor 130 zur Erfassung des Fahrerdrehmoments, einen Drehzahlsensor 131 zur Erfassung der Drehzahl der Tretachse 104 beziehungsweise der Kadenz des Fahrers und einen Drehwinkelsensor 132 zur Erfassung der Winkellage beziehungsweise der Position der Kurbel 105 bezüglich dessen Rotation um die Tretachse 104. Als Sensor ist außerdem am Lenker 103 des Fahrzeugs 100 ein Gangschalthebel beziehungsweise Gangwechsel-Taster 133 angeordnet. Der Gangwechsel-Taster 133 ist dazu eingerichtet, eine Eingabe eines Fahrers zur Auswahl beziehungsweise Änderung eines Übersetzungsverhältnisses zu erfassen. Des Weiteren kann das Fahrzeug 100 einen optionalen Gangwechselerfassungssensor 134 aufweisen, welcher dazu eingerichtet ist, eine Bewegung des Bowdenzugs 121 zum schaltbaren Getriebe 120 als Gangwechselsignal des Fahrers zu erfassen. Außerdem kann das Fahrzeug einen Geschwindigkeitssensor aufweisen (nicht dargestellt) und/oder die Geschwindigkeit des Fahrzeug basierend auf Ortsdaten ermitteln, wobei die Ortsdaten beispielsweise durch Funkcodes eines globalen Navigationssatellitensystem (z.B.: GPS, Galileo, GLONASS, Beidou) mittels einer Antenne bestimmt werden. Des Weiteren weist das Fahrzeug 100 optional eine Anzeigevorrichtung 140 beziehungsweise ein HMI beziehungsweise Display auf. Die Anzeigevorrichtung 140 ist dazu eingerichtet, dem Fahrer des Fahrzeugs Informationen anzuzeigen. Die Antriebseinheit 110 des Fahrzeugs 100 umfasst des Weiteren ein Steuergerät 113. Das Steuergerät 113 ist dazu eingerichtet, den Elektromotor 111 anzusteuern und ein erfindungsgemäßes Verfahren zur Schaltung eines Übersetzungsverhältnisses des schaltbaren Getriebes 120 durchzuführen.

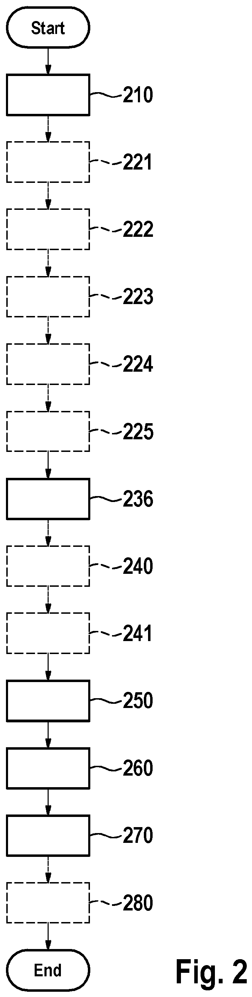

In Figur 2 ist ein Ablaufdiagramm des Verfahrens als Blockschaltbild schematisch dargestellt. Zunächst wird im Schritt 210 ein Motordrehmoment mittels des Elektromotors des Fahrzeugs 100 erzeugt. Im Falle eines Elektrofahrrads als Fahrzeug 100 wird vorteilhafterweise das Motordrehmoment in Abhängigkeit eines erfassten Fahrerdrehmoments und/oder einer erfassten Trittfrequenz des Fahrers beziehungsweise einer erfassten Kadenz des Fahrers erzeugt. Im optionalen Schritt 221 wird das Fahrerdrehmoment erfasst. Die Erfassung 221 erfolgt insbesondere mittels eines Drehmomentsensors, beispielsweise basierend auf dem inversen magnetostriktiven Effekt an einer koaxial zur Tretachse 104 angeordneten Hohlwelle. Im optionalen Schritt 222 wird die Trittfrequenz beziehungsweise Kadenz des Fahrers erfasst, insbesondere mittels eines Drehzahlsensors, welcher dazu eingerichtet ist, die Umdrehung der Tretachse 104 basierend auf der Rotation der Kurbeln zumindest einmal pro Umdrehung einer Kurbel 105 zu erfassen. Darüber hinaus kann optional, nicht in den Figuren 1 und 2 dargestellt, eine Winkellage der Kurbeln bei der Rotation um die Tretachse beziehungsweise die Winkelposition der Rotation der Tretachse 104 erfasst werden. Es kann des Weiteren optional eine Erfassung 223 einer Geschwindigkeit des Fahrzeugs durchgeführt werden. Die Geschwindigkeit des Fahrzeugs kann beispielsweise mittels eines Drehzahlsensors oder zumindest eines Reed-Sensors an dem Vorderrad 101 und/oder dem Hinterrad 102 erfasst werden. Alternativ oder zusätzlich kann die Geschwindigkeit des Fahrzeugs in Abhängigkeit von empfangenen Funkcodes eines globalen Navigationssatellitensystems (z.B.: GPS, Galileo, GLONASS, Beidou) mittels eines Ortssensors beziehungsweise einer Antenne ermittelt werden. Es wird darüber hinaus im optionalen Schritt 224 eine Eingabe des Fahrers mittels des Gangwechsel-Tasters 133 erfasst, welche einen Gangwechselwunsch repräsentiert. Alternativ kann im optionalen Schritt 225 mittels eines Gangwechselerfassungssensors 134 an einem Bowdenzug 121 des schaltbaren Getriebes 120 und/oder mittels eines Gangwechselerfassungssensors 134 an dem schaltbaren Getriebe 120 eine Bewegung des Bowdenzugs oder eine Bewegung von Zahnrädern oder einer Kette erfasst werden, welches jeweils einen bevorstehenden Gangwechsel repräsentiert. Im Schritt 230 wird der bevorstehende Gangwechsels ermittelt. Die Ermittlung 230 des bevorstehenden Gangwechsels erfolgt bevorzugt in Abhängigkeit der im Schritt 224 erfassten Eingabe. Alternativ oder zusätzlich wird der bevorstehende Gangwechsel basierend auf der im Schritt 225 erfassten Bewegung und/oder basierend auf dem im Schritt 221 erfassten Fahrerdrehmoment und/oder basierend auf der im Schritt 222 erfassten Trittfrequenz und/oder basierend auf der im Schritt 223 erfassten Geschwindigkeit des Fahrzeugs durchgeführt. Besonders bevorzugt wird im optionalen Schritt 240 eine Drehwinkellage der Tretachse 104 und/oder wenigstens einer Position der Kurbel 105 ermittelt beziehungsweise erfasst und anschließend im Schritt 241 ein Zeitpunkt zur Reduktion des erzeugten Motordrehmoments in Abhängigkeit der erfassten Drehwinkellage der Tretachse 104 und/oder der erfassten Position der Kurbel 105 ermittelt. Danach wird im Schritt 250 der Betrag des erzeugten Motordrehmoments in Abhängigkeit des ermittelten bevorstehenden Gangwechsels zumindest reduziert. Diese Reduktion 260 des Betrags des erzeugten Motordrehmoments erfolgt bevorzugt zusätzlich in Abhängigkeit des ermittelten Zeitpunktes. Nach der Reduktion des Betrags des erzeugten Motordrehmoments wird im Schritt 260 ein Übersetzungsverhältnis des schaltbaren Getriebes 120 während einer vorgegebenen Zeitspanne geändert. Die Änderung 260 des Übersetzungsverhältnisses des schaltbaren Getriebes kann zusätzlich in Abhängigkeit des ermittelten Zeitpunktes erfolgen. Erfindugnsgemäß wird während der vorgegebenen Zeitspanne zur Änderung des Übersetzungsverhältnisses im Schritt 270 wenigstens eines Motordrehmomentimpulses mittels des Elektromotors erzeugt. Vorteilhafterweise werden im Schritt 270 zwei, drei oder vier Motordrehmomentimpulse erzeugt. Durch die Erzeugung 270 der Motordrehmomentimpulse während der vorgegebenen Zeitspanne resultiert ein erhöhtes mittleres Drehmoment. Das mittleres Drehmoment weist insbesondere eine betragsmäßige Abweichung kleiner oder gleich 50 Prozent zu einem Betrag des unmittelbar vor der Reduktion erzeugten Motordrehmoments auf. Vorteilhafterweise ist Summe die während der vorgegebenen Zeitspanne vorliegenden wenigstens zwei Reduktionszeitspannen, in welchen das Motordrehmoment reduziert ist, kleiner oder gleich der Summe der wenigstens einen Impulsdauer des im Schritt 270 erzeugten Motordrehmomentimpulses. Der Betrag der während der vorgegebenen Zeitspanne erzeugten Motordrehmomentimpulse bleibt vorzugsweise gleich. Alternativ variiert der Betrag der erzeugten Motordrehmomentimpulse während der vorgegebenen Zeitspanne. Die Dauer der vorgegebenen Zeitspanne und/oder die Anzahl der erzeugten Motordrehmomentimpulse kann optional in Abhängigkeit der erfassten Geschwindigkeit des Fahrzeugs und/oder in Abhängigkeit der erfassten Trittfrequenz des Fahrers und/oder in Abhängigkeit des aktuell eingelegten Übersetzungsverhältnisses des schaltbaren Getriebes angepasst werden. Des Weiteren kann dem Fahrer im optionalen Schritt 280 eine Information zu dem ermittelten Zeitpunkt zur Reduktion des erzeugten Motordrehmoments und/oder zu der vorgegebenen Zeitspanne zur Änderung des Übersetzungsverhältnisses angezeigt werden.

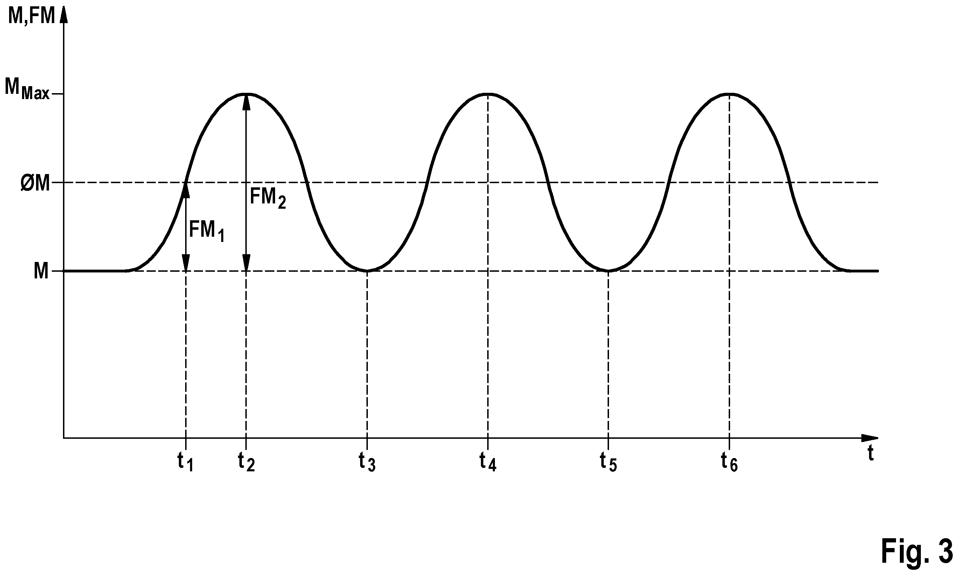

In Figur 3 ist ein Diagramm eines typischen Drehmomentverlaufs im Betrieb eines Elektrofahrrads während der Fahrt schematisch dargestellt, wobei kein Schaltvorgang vorliegt. Das vom Fahrer auf die Pedale periodisch wechselnd durch Trittkräfte auf die Pedale aufgebrachte Fahrerdrehmoment FM wird einem durch den Elektromotor erzeugtem Motordrehmoment M überlagert. Mit anderen Worten werden das Motordrehmoment M und das Fahrerdrehmoment zumindest an einem Ausgang, insbesondere dem Abtriebsritzel 107 der Antriebseinheit 110, summiert und auf die Summe dieser Drehmomente auf das Verbindungselement 108 und das Hinterrad 102 übertragen. Es resultiert ein mittleres Drehmoment ØM. Das Motordrehmoment M kann in Abhängigkeit des mittels eines Drehmomentsensors erfassten Fahrerdrehmoments FM angepasst beziehungsweise erzeugt werden, wobei diese Erzeugung insbesondere basierend auf einem über mehrere Perioden gemitteltem Fahrerdrehmoment ØFM erfolgt. Demnach ist der Verlauf des erzeugten Motordrehmoments M, wie in Figur 3 dargestellt, typischerweise wesentlich konstanter als der Verlauf des erfassten Fahrerdrehmoments FM. Zur Erläuterung sind mehrere Zeitpunkte t1, t2, t3, t4, t5 und t6 dargestellt, an welchen hier beispielsweise jeweils der im Wesentlichen gleiche Betrag des Motordrehmoments M erzeugt wird. Das auf die Tretachse durch den Fahrer aufgebrachte Fahrerdrehmoment basiert auf dessen Trittkräften auf das rechte und linke Pedal. Es steigt beispielsweise vom Zeitpunkt t1 mit dem aufgebrachten Fahrerdrehmoment FM1 bis zum Zeitpunkt t2 mit dem aufgebrachten Fahrerdrehmoment FM2 an, wobei zum Zeitpunkt t2 ein Maximum des aufgebrachten Fahrerdrehmoments FM erreicht wird. Vom Zeitpunkt t2 bis zum Zeitpunkt t3 fällt das aufgebrachte Fahrerdrehmoment bis auf null ab, da zum Zeitpunkt t3 die Pedale typischerweise bezüglich einer Pedalrotation um die Tretachse beziehungsweise Kurbelwelle im Bereich des oberen und unteren Punkts stehen. Die Stellung der Pedale am oberen und/oder unteren Punkt, auch Totpunkte genannt, erlauben dem Fahrer keine Übertragung einer großen Trittkraft, da er typischerweise oberhalb der Tretachse sitzt beziehungsweise die Trittkräfte im Wesentlichen von oben auf die Pedale aufgebracht werden. Von der Stellung der Pedale am oberen und/oder unteren Punkt steigt das Fahrerdrehmoment typischerweise kontinuierlich an, bis ein maximaler Betrag des Fahrerdrehmoments FM zu den Zeitpunkt t4 bei waagerecht stehenden Pedalen aufgebracht wird. Anschließend fällt das Fahrerdrehmoment zwischen dem Zeitpunkt t4 und dem Zeitpunkt t5 wieder kontinuierlich bis zum Zeitpunkt t5, wobei zum Zeitpunkt t5 erneut näherungsweise ein Fahrerdrehmoment mit dem Betrag null aufgebracht wird. Eine vollständige Rotation eines Pedals beziehungsweise eine vollständige Umdrehung der Tretachse entspricht der Zeitspanne von dem Zeitpunkt t2 bis zum Zeitpunkt t6, zu welchem erneut ein Maximum des Betrags des Fahrerdrehmoments FM aufgebracht wird. Mit anderen Worten liegen beim gleichmäßigem Pedalieren des Fahrers pro vollständiger Umdrehung der Tretachse beziehungsweise während der vollständigen Umdrehung eines jeweiligen Pedals zwei Minima und zwei Maxima des Betrags des Fahrerdrehmoments FM vor. Typischerweise werden durch den Fahrer 60 bis 120 Umdrehungen pro Minute erreicht. Das aufgebrachte Fahrerdrehmoments FM und die aufgebrachte Trittfrequenz des Fahrers beziehungsweise die erzeugte Drehzahl an der Tretachse 104 basieren auf dem aktuellen Übersetzungsverhältnis zwischen der Tretachse und dem Hinterrad 102. Das summierte Drehmoment aus Fahrerdrehmoment FM und erzeugtem Motordrehmoment M wird vorteilhafterweise mittels mindestens eines schaltbaren Getriebes 120 an das Hinterrad 102 übertragen. Beim Schalten des schaltbaren Getriebes resultieren folglich Sprünge im Drehmomentverlauf.

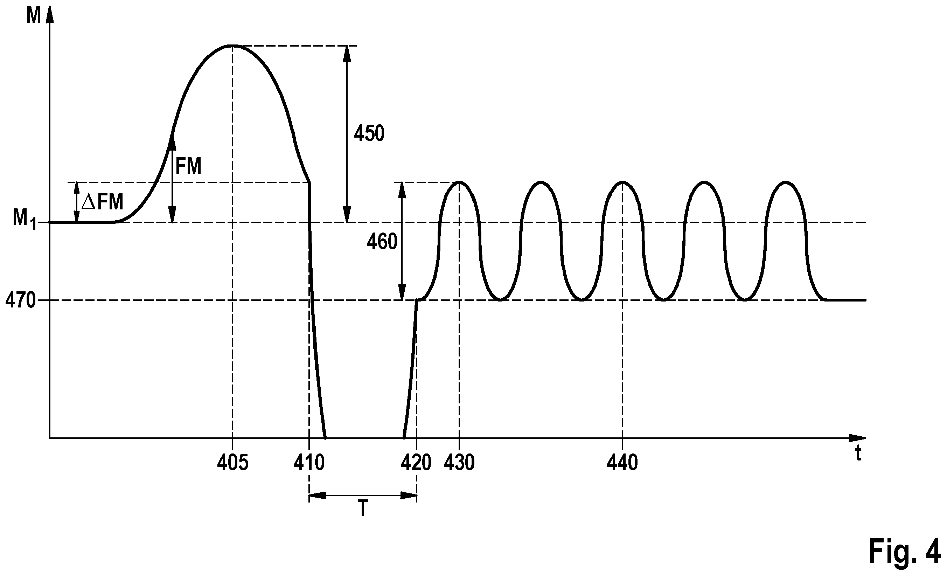

In Figur 4 ist ein Diagramm des Drehmomentverlaufs beim Schalten nach dem Stand der Technik schematisch dargestellt. Manche schaltbaren Getriebe 120 können nicht bei einem kontinuierlich anliegenden Drehmoment geschaltet werden, insbesondere gilt dies für manche Nabenschaltungen. Wenn beispielsweise mittels einer Betätigung eines Schalthebels durch den Fahrer ein gewünschter Gangwechsel ermittelt wurde, kann wegen dem anliegenden Motordrehmoment und dem periodisch aufgebachten Fahrerdrehmoment nicht unmittelbar geschaltet werden. Folglich wartet das Verfahren im Stand der Technik ab, bis beispielsweise mittels des Drehmomentsensors, welcher mit der Tretachse 104 verbunden ist, ein Fahrerdrehmoment FM kleiner oder gleich einem Schwellenwert ΔFM oder eine Position der Kurbeln im Bereich des oberen und unteren Punktes erfasst wird. Anschließend wird zum Zeitpunkt 410 das erzeugte Motordrehmoment von dem Betrag M1 auf null reduziert. Während der ab dem Zeitpunkt 410 bis zum Zeitpunkt 420 laufenden vorgegebenen Zeitspanne T mit dem reduzierten Motordrehmoment wird ein Übersetzungsverhältnis geändert beziehungsweise geschaltet. Die vorgegebene Zeitspanne beträgt beispielsweise 0,5 Sekunden. Zwischen dem Zeitpunkt 410 und dem Zeitpunkt 420 wird in diesem Ausführungsbeispiel kein Motordrehmoment erzeugt. Zu dem Zeitpunkt 410 stehen des Weiteren die Pedale im Bereich des oberen und unteren Punktes bezüglich der Rotation der Pedale um die Tretachse 104, so dass kein oder kaum ein Fahrerdrehmoment auf die Pedale 106 durch den Fahrer aufgebracht werden kann. Folglich wird ein lastfreies Schalten des schaltbaren Getriebes 120 während der vorgegebenen Zeitspanne T ermöglicht. Zum Zeitpunkt 420, das heißt nach Ablauf der vorgegebenen Zeitspanne T, wird erneut ein Motordrehmoment erzeugt, beispielsweise mit dem Betrag 470. Das nach dem Zeitpunkt 420 aufgebrachte Fahrerdrehmoment FM des Fahrers weist nach dem Schalten aufgrund der Änderung des Übersetzungsverhältnisses einen anderen Maximalbetrag 460 gegenüber dem Maximalbetrag 450 zum Zeitpunkt 405 vor dem Schalten auf. Entsprechend resultiert beispielsweise beim Runterschalten eine vergrößerte Trittfrequenz, wie in Figur 4 dargestellt. Mit anderen Worten wird im Beispiel aus Figur 4 eine Dauer einer vollständigen Umdrehung der Tretachse zwischen den Zeitpunkten 430 und 440 nach dem Schalten aufgrund des reduzierten Übersetzungsverhältnisses verkürzt.

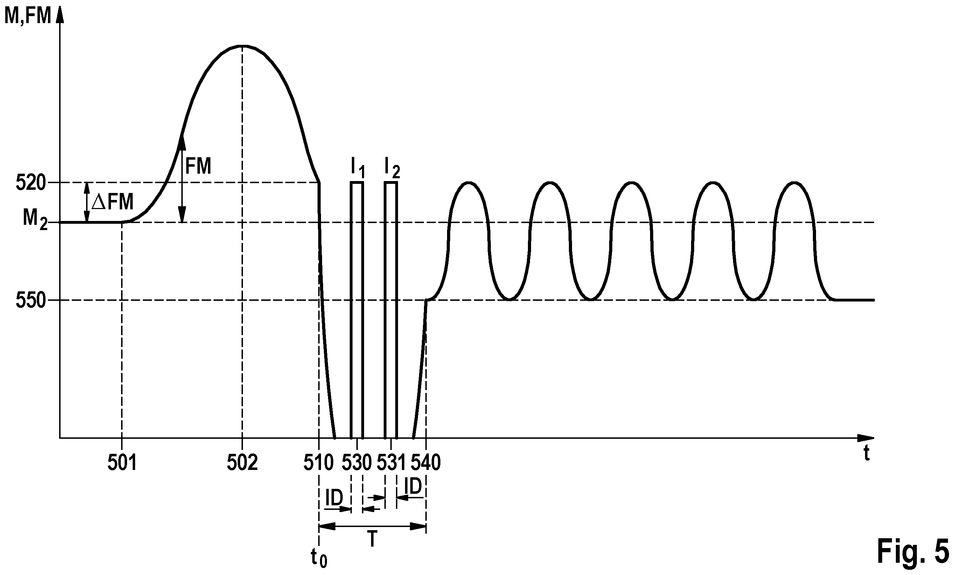

In Figur 5 ist ein Beispieldiagramm für einen erfindungsgemäßen Drehmomentverlauf beim Schalten schematisch dargestellt. Zunächst bringt bis zum Zeitpunkt 510 der Fahrer das Fahrerdrehmoment FM auf die Pedale 106 beziehungsweise die Tretachse 104 auf und mittels des Elektromotors 111 wird das Motordrehmoment wird mit einem Betrag M2 erzeugt. Wenn im Schritt 430 ein gewünschter Gangwechsel ermittelt wurde, kann in der Regel wegen dem anliegenden Motordrehmoment und dem periodisch aufgebachten Fahrerdrehmoment nicht unmittelbar geschaltet werden. Folglich wartet das Verfahren ab, bis beispielsweise ein Fahrerdrehmoment FM kleiner oder gleich einem Schwellenwert ΔFM erfasst wird. Es kann alternativ vorteilhafterweise vorgesehen sein, dass der Zeitpunkt 510 beziehungsweise t0 zur Reduktion des erzeugten Motordrehmoments beispielsweise in Abhängigkeit des erfassten Fahrerdrehmoments und/oder der erfassten Drehzahl der Tretachse ermittelt wird. Die Ermittlung 241 des Zeitpunkts 510 beziehungsweise t0 zur Reduktion des erzeugten Motordrehmoments M erfolgt beispielsweise zum Zeitpunkt 501 eines letzten Nulldurchgangs des erfassten Fahrerdrehmoments oder zum Zeitpunkt 502 eines letzten Durchgangs eines Maximums des erfassten Fahrerdrehmoments oder zu einem anderen Zeitpunkt des Verlaufs des erfassten Fahrerdrehmoments in Abhängigkeit des erfassten Fahrerdrehmoments und/oder der erfassten Drehzahl der Tretachse, das heißt prognostizierend. Anschließend wird im Schritt 250 das erzeugte Motordrehmoment reduziert, insbesondere auf den Betrag null. Mit anderen Worten wird vorteilhafterweise die Ansteuerung des Elektromotors so angepasst, dass der Elektromotor 111 nach dem Zeitpunkt 510 zunächst am Anfang der vorgegebenen Zeitspanne T kein Motordrehmoment erzeugt. Erfindungsgemäß werden anschließend während der vorgegebenen Zeitspanne T nach der Reduktion 250 des Betrags des erzeugten Motordrehmoments M das Übersetzungsverhältnisses des schaltbaren Getriebes 120 geändert und durch den Schritt 270 wenigstens ein Motordrehmomentimpuls I1 mittels des Elektromotors erzeugt. Im Beispiel aus Figur 5 werden zwei Motordrehmomentimpulse I1, I2 während der vorgegebenen Zeitspanne T erzeugt. Ein Motordrehmomentimpuls I1 zum Zeitpunkt 530 und ein weiterer Motordrehmomentimpuls I2 zum Zeitpunkt 531. Die Motordrehmomentimpulse I1, I2 weisen in diesem Ausführungsbeispiel eine gleiche Impulsdauer ID und einen gleichen Betrag auf, wobei der Impulsbetrag jeweils dem Betrag der Summe aus dem Betrag M2 des erzeugten Motordrehmoments und dem aufgebrachten Fahrerdrehmoment vor dem Schritt 250 zum Zeitpunkt 510 entspricht. Die Anzahl der Impulse während der vorgegebenen Zeitspanne T, die Impulsdauer ID und ein Betrag eines Motordrehmomentimpules können variiert werden, beispielsweise in Abhängigkeit des aktuellen oder zukünftigen Übersetzungsverhältnisses oder in Abhängigkeit der Geschwindigkeit des Fahrzeugs. Die erzeugten Motordrehmomentimpulse I1, I2 erhöhen das mittlere Drehmoment während der vorgegebenen Zeitspanne T und unterstützen zusätzlich die Änderung des Übersetzungsverhältnisses, da die durch die Motordrehmomentimpulse I1, I2 ausgelöste Schwingung der Komponenten im Antriebsstrang die mechanische Bewegung beim Schalten des schaltbaren Getriebes gefördert wird. Nach dem Ablauf der vorgegebenen Zeitspanne T wird ab dem Zeitpunkt 540 erneut ein Motordrehmoment erzeugt, wobei der Betrag 550 von dem Betrag M2 des erzeugten Motordrehmoments vor der Reduktion 250 zum Zeitpunkt 510 abweichen oder gleich sein kann. Es kann im Ausführungsbeispiel von Figur 5 ab dem Zeitpunkt 540 beispielsweise ein von dem Betrag M2 zum Betrag 550 des erzeugten Motordrehmoments abfallender Verlauf vorgesehen sein (nicht dargestellt).

## Patentansprüche

1. Verfahren zur Schaltung eines Übersetzungsverhältnisses eines schaltbaren Getriebes (120) eines Fahrzeugs (100) mit einem Elektromotor (111) zum Antrieb des Fahrzeugs (100), umfassend die folgenden Verfahrensschritte
• Erzeugung (210) eines Motordrehmoments (M) mittels des Elektromotors (111),
• Ermittlung (230) eines bevorstehenden Gangwechsels,
• Reduktion (250) des Betrags des erzeugten Motordrehmoments in Abhängigkeit des ermittelten Gangwechsels, und
• Änderung (260) des Übersetzungsverhältnisses des schaltbaren Getriebes (120) während einer vorgegebenen Zeitspanne (T) nach der Reduktion (250) des Betrags des erzeugten Motordrehmoments (M),
**dadurch gekennzeichnet, dass** der folgende Schritt durchgeführt wird
• Erzeugung (270) wenigstens eines Motordrehmomentimpulses (I1, I2) mittels des Elektromotors (111) während der vorgegebenen Zeitspanne (T), wobei ein mittleres Drehmoment während der vorgegebenen Zeitspanne (T) größer als der reduzierte Betrag des Motordrehmoments (M) ist.

2. Verfahren nach Anspruch 1, wobei das Fahrzeug (100) zusätzlich eine Tretachse (104) aufweist, welche mit Kurbeln (105) verbunden ist, wobei das Verfahren zusätzlich folgende Schritte umfasst
• Erfassung (240) einer Drehwinkellage der Tretachse (104) und/oder wenigstens einer Position einer Kurbel (105) und/oder eines Fahrerdrehmoments und/oder einer Drehzahl der Tretachse (104),
• Ermittlung (241) eines Zeitpunktes (t0) zur Reduktion des erzeugten Motordrehmoments (M) in Abhängigkeit der erfassten Drehwinkellage der Tretachse (104) und/oder der erfassten Position der Kurbel (105) und/oder des erfassten Fahrerdrehmoments und/oder einer erfassten Drehzahl der Tretachse (104), und
• Reduktion (250) des Betrags des erzeugten Motordrehmoments (M) zusätzlich in Abhängigkeit des ermittelten Zeitpunktes (t0), und/oder
• Änderung (260) des Übersetzungsverhältnisses des schaltbaren Getriebes (120) zusätzlich in Abhängigkeit des ermittelten Zeitpunktes.

3. Verfahren nach einem der vorhergehenden Ansprüche, wobei zwei, drei oder vier Motordrehmomentimpulse (I1, I2) während der vorgegebenen Zeitspanne (T) zur Änderung (260) des Übersetzungsverhältnisses erzeugt werden.

4. Verfahren nach einem der vorhergehenden Ansprüche, wobei durch die erzeugten Motordrehmomentimpulse (I1, I2) während der vorgegebenen Zeitspanne (T) ein mittleres Drehmoment (ØM) resultiert, welches eine betragsmäßige Abweichung kleiner oder gleich 50 Prozent zu einem Betrag des unmittelbar vor der Reduktion erzeugten Motordrehmoments (M) aufweist.

5. Verfahren nach einem der vorhergehenden Ansprüche, wobei während der vorgegebenen Zeitspanne die Summe der wenigstens zwei Reduktionszeitspannen (R), in welchen das Motordrehmoment (M) reduziert ist, kleiner oder gleich der Summe der wenigstens einen Impulsdauer (ID) des erzeugten Motordrehmomentimpulses (I1, I2) ist.

6. Verfahren nach einem der vorhergehenden Ansprüche, wobei der Betrag der während der vorgegebenen Zeitspanne (T) erzeugten Motordrehmomentimpulse (I1, I2) gleichbleibt.

7. Verfahren nach einem der vorhergehenden Ansprüche, wobei der Betrag der während der vorgegebenen Zeitspanne (T) erzeugten Motordrehmomentimpulse (I1, I2) variiert.

8. Verfahren nach einem der vorhergehenden Ansprüche, wobei die Dauer der vorgegebenen Zeitspanne (T) und/oder die Anzahl der erzeugten Motordrehmomentimpulse (I1, I2) in Abhängigkeit einer erfassten Geschwindigkeit des Fahrzeugs (100) und/oder in Abhängigkeit einer erfassten Trittfrequenz des Fahrers und/oder in Abhängigkeit eines erfassten aktuell eingelegten Übersetzungsverhältnisses des schaltbaren Getriebes (120) angepasst wird.

9. Verfahren nach einem der vorhergehenden Ansprüche, wobei die Ermittlung (230) des bevorstehenden Gangwechsels in Abhängigkeit einer erfassten Eingabe des Fahrers mittels eines Gangwechsel-Tasters (133) durchgeführt wird.

10. Verfahren nach einem der vorhergehenden Ansprüche, wobei die Ermittlung (230) des bevorstehenden Gangwechsels mittels eines Gangwechselerfassungssensors (134) an einem Bowdenzug (121) des schaltbaren Getriebes (120) und/oder an dem schaltbaren Getriebe (120) erfolgt.

11. Verfahren nach einem der vorhergehenden Ansprüche, wobei die Ermittlung (230) des bevorstehenden Gangwechsels automatisch oder teilautomatisch in Abhängigkeit eines mittels eines Drehmomentsensors (130) erfassten Fahrerdrehmoments des Fahrers und/oder einer mittels eines Drehzahlsensors (131) erfassten Trittfrequenz des Fahrers ermittelt wird.

12. Verfahren nach einem der vorhergehenden Ansprüche, wobei folgender Schritt durchgeführt wird
• Anzeige (280) einer Information für den Fahrer zu dem ermittelten Zeitpunkt (t0) zur Reduktion des erzeugten Motordrehmoments (M) und/oder zu der vorgegebenen Zeitspanne (T) zur Änderung des Übersetzungsverhältnisses.

13. Steuergerät (113) für ein Fahrzeug (100), wobei das Steuergerät (113) dazu eingerichtet ist, ein Verfahren zur Schaltung eines Übersetzungsverhältnisses des schaltbaren Getriebes (120) nach einem der Ansprüche 1 bis 12 durchzuführen.

14. Fahrzeug (100), insbesondere Elektrofahrrad, wobei das Fahrzeug (100) ein schaltbares Getriebe (120), einen Elektromotor (111) zum Antrieb des Fahrzeugs und ein Steuergerät (113) nach Anspruch 13 aufweist.

## Claims

1. Method for selecting a transmission ratio of a shiftable gear system (120) of a vehicle (100) having an electric motor (111) for driving the vehicle (100), comprising the following method steps
• generating (210) a motor torque (M) by means of the electric motor (111),
• determining (230) an imminent gear shift,
• reducing (250) the magnitude of the generated motor torque depending on the determined gear shift, and
• changing (260) the transmission ratio of the shiftable gear system (120) during a specified time period (T) after reducing (250) the magnitude of the generated motor torque (M),
**characterized in that** the following step is performed
• generating (270) at least one motor torque pulse (I1, I2) by means of the electric motor (111) during the specified time period (T), wherein a mean torque during the specified time period (T) is greater than the reduced magnitude of the motor torque (M).

2. Method according to Claim 1, wherein the vehicle (100) additionally has a pedal axle (104) which is connected to cranks (105), wherein the method additionally comprises the following steps
• detecting (240) a rotation angle position of the pedal axle (104) and/or at least one position of a crank (105) and/or a rider torque and/or a rotation speed of the pedal axle (104),
• determining (241) a time point (t0) for reducing the generated motor torque (M) depending on the detected rotation angle position of the pedal axle (104) and/or the detected position of the crank (105) and/or the detected rider torque and/or a detected rotation speed of the pedal axle (104), and
• reducing (250) the magnitude of the generated motor torque (M) additionally depending on the determined time point (t0), and/or
• changing (260) the transmission ratio of the shiftable gear system (120) additionally depending on the determined time point.

3. Method according to either of the preceding claims, wherein two, three or four motor torque pulses (I1, I2) are generated during the specified time period (T) for changing (260) the transmission ratio.

4. Method according to any of the preceding claims, wherein a mean torque (ØM) results from the generated motor torque pulses (I1, I2) during the specified time period (T), the magnitude of the mean torque deviating by less than or equal to 50 per cent from a magnitude of the motor torque (M) generated immediately before the reduction.

5. Method according to any of the preceding claims, wherein, during the specified time period, the sum of the at least two reduction time periods (R), in which the motor torque (M) is reduced, is less than or equal to the sum of the at least one pulse duration (ID) of the generated motor torque pulse (I1, I2).

6. Method according to any of the preceding claims, wherein the magnitude of the motor torque pulses (11, I2) generated during the specified time period (T) remains the same.

7. Method according to any of the preceding claims, wherein the magnitude of the motor torque pulses (I1, I2) generated during the specified time period (T) varies.

8. Method according to any of the preceding claims, wherein the duration of the specified time period (T) and/or the number of generated motor torque pulses (I1, I2) is adjusted depending on a detected speed of the vehicle (100) and/or depending on a detected rider cadence and/or depending on a detected currently selected transmission ratio of the shiftable gear system (120).

9. Method according to any of the preceding claims, wherein the imminent gear shift is determined (230) depending on a detected input by the rider by means of a gear shifter (133).

10. Method according to any of the preceding claims, wherein the imminent gear shift is determined (230) by means of a gear shift detection sensor (134) on a Bowden cable (121) of the shiftable gear system (120) and/or on the shiftable gear system (120).

11. Method according to any of the preceding claims, wherein the imminent gear shift is determined (230) automatically or partially automatically depending on a rider torque detected by means of a torque sensor (130) and/or a rider cadence detected by means of a rotation speed sensor (131).

12. Method according to any of the preceding claims, wherein the following step is carried out
• displaying (280) to the rider information relating to the determined time point (t0) for reducing the generated motor torque (M) and/or relating to the specified time period (T) for changing the transmission ratio.

13. Control device (113) for a vehicle (100), wherein the control device (113) is configured to carry out a method for selecting a transmission ratio of the shiftable gear system (120) according to any of Claims 1 to 12.

14. Vehicle (100), in particular electric bicycle, wherein the vehicle (100) has a shiftable gear system (120), an electric motor (111) for driving the vehicle and a control device (113) according to Claim 13.

## Revendications

1. Procédé de changement d'un rapport de changement de vitesses d'une transmission (120) commutable d'un véhicule (100) avec un moteur électrique (111) pour entraîner le véhicule (100), comprenant les étapes de procédé suivantes
• génération (210) d'un couple de rotation de moteur (M) au moyen du moteur électrique (111),
• détermination (230) d'un changement de rapport imminent,
• réduction (250) de la valeur du couple de rotation de moteur généré en fonction du changement de rapport déterminé, et
• modification (260) du rapport de changement de vitesses de la transmission (120) commutable pendant une période de temps prédéfinie (T) après la réduction (250) de la valeur du couple de rotation de moteur (M) généré, **caractérisé en ce que** l'étape suivante est mise en œuvre
• génération (270) d'au moins une impulsion de couple de rotation de moteur (I1, I2) au moyen du moteur électrique (111) pendant la période de temps prédéfinie (T), un couple de rotation moyen pendant la période de temps prédéfinie (T) étant supérieur à la valeur réduite du couple de rotation de moteur (M).

2. Procédé selon la revendication 1, le véhicule (100) comportant en outre un axe de pédale (104) qui est relié à des manivelles (105), le procédé comprenant en supplément l'étape suivante
• détection (240) d'une position angulaire de rotation de l'axe de pédale (104) et/ou d'au moins une position d'une manivelle (105) et/ou d'un couple de rotation de cycliste et/ou d'une vitesse de rotation de l'axe de pédale (104),
• détermination (241) d'un moment (t0) pour la réduction du couple de rotation de moteur (M) généré en fonction de la position angulaire de rotation détectée de l'axe de pédale (104) et/ou de la position détectée de la manivelle (105) et/ou du couple de rotation de cycliste détecté et/ou d'une vitesse de rotation détectée de l'axe de pédale (104), et
• réduction (250) de la valeur du couple de rotation de moteur (M) généré en supplément en fonction du moment déterminé (t0), et/ou
• modification (260) du rapport de changement de vitesses de la transmission (120) commutable en supplément en fonction du moment déterminé.

3. Procédé selon l'une des revendications précédentes, deux, trois ou quatre impulsions de couple de rotation de moteur (I1, I2) étant générées pendant la période de temps prédéfinie (T) pour la modification (260) du rapport de changement de vitesses.

4. Procédé selon l'une des revendications précédentes, un couple de rotation moyen (ØM) résultant des impulsions de couple de rotation de moteur (I1, I2) générées pendant la période de temps prédéfinie (T), qui présente un écart en valeur inférieur ou égal à 50 % par rapport à une valeur du couple de rotation de moteur (M) généré immédiatement avant la réduction.

5. Procédé selon l'une des revendications précédentes, la somme des au moins deux périodes de temps de réduction (R), dans lesquelles le couple de rotation de moteur (M) est réduit, étant, pendant la période de temps prédéfinie, inférieure ou égale à la somme de l'au moins une durée d'impulsion (ID) de l'impulsion de couple de rotation de moteur (I1, I2) générée.

6. Procédé selon l'une des revendications précédentes, la valeur des impulsions de couple de rotation de moteur (I1, I2) générées pendant la période de temps prédéfinie (T) restant la même.

7. Procédé selon l'une des revendications précédentes, la valeur des impulsions de couple de rotation de moteur (I1, I2) générées pendant la période de temps prédéfinie (T) variant.

8. Procédé selon l'une des revendications précédentes, la durée de la période de temps prédéfinie (T) et/ou le nombre des impulsions de couple de rotation de moteur (I1, I2) générées étant adaptés en fonction d'une vitesse détectée du véhicule (100) et/ou en fonction d'une fréquence de pédalage détectée du cycliste et/ou en fonction d'un rapport de changement de vitesses actuellement enclenché détecté de la transmission (120) commutable.

9. Procédé selon l'une des revendications précédentes, la détermination (230) du changement de rapport imminent étant mise en œuvre en fonction d'une entrée détectée du cycliste au moyen d'un bouton de changement de rapport (133).

10. Procédé selon l'une des revendications précédentes, le changement de rapport imminent étant déterminé (230) au moyen d'un capteur de détection de changement de rapport (134) sur un câble Bowden (121) de la transmission (120) commutable et/ou sur la transmission (120) commutable.

11. Procédé selon l'une des revendications précédentes, le changement de rapport imminent est déterminé (230) automatiquement ou en partie automatiquement en fonction d'un couple de rotation de cycliste détecté au moyen d'un capteur de couple de rotation (130) et/ou en fonction d'une fréquence de pédalage du cycliste détectée au moyen d'un capteur de vitesse de rotation (131).

12. Procédé selon l'une des revendications précédentes, une étape suivante étant mise en œuvre
• affichage (280) d'informations destinées au cycliste au moment déterminé (t0) pour réduire le couple de rotation de moteur (M) généré et/ou pendant la période de temps prédéfinie (T) pour modifier le rapport de changement de vitesses.

13. Appareil de commande (113) pour un véhicule (100), l'appareil de commande (113) étant mis au point pour mettre en œuvre un procédé de changement d'un rapport de changement de vitesses de la transmission (120) commutable selon l'une des revendications 1 à 12.

14. Véhicule (100), en particulier bicyclette électrique, le véhicule (100) comportant une transmission (120) commutable, un moteur électrique (111) pour entraîner le véhicule et un appareil de commande (113) selon la revendication 13.
